# FASCICULE DE BREVET EUROPEEN

(11) **EP 2 735 706 B1**
(45) Date de publication et mention de la délivrance du brevet: **22.06.2016**
(21) Numéro de dépôt: 12193700.7
(22) Date de dépôt: 21.11.2012
(51) Int. Cl.: F01D 9/04

(54) **Redresseur à aubes de compresseur de turbomachine axiale et procédé de fabrication**
Gleichrichter mit Laufradschaufeln eines Kompressors eines axialen Turbotriebwerks, und Herstellungsverfahren
Vane diffuser of an axial turbomachine compressor and method for manufacturing same

(43) Date de publication de la demande: 28.05.2014
(73) Titulaire: Techspace Aero S.A., 4041 Herstal (Milmort) (BE)
(72) Inventeur: Charles, Xavier, 4000 Liège (BE)
(74) Mandataire: Lecomte & Partners

(56) Documents cités:
- EP-A1- 2 075 416
- DE-A1-102004 036 066
- US-A1- 2005 031 446

## Description

### Domaine technique

L'invention a trait à un redresseur de turbomachine axiale. L'invention a également trait à une turbomachine axiale comprenant un compresseur et une turbine munis de redresseurs. L'invention a également trait à un procédé de fabrication d'un redresseur de turbomachine axiale.

### Technique antérieure

Afin d'atteindre des taux de compression élevés, un compresseur de turbomachine axiale présente couramment une pluralité d'étages. Un étage est constitué essentiellement d'une rangée d'aubes rotoriques suivie d'une rangée d'aubes statoriques. Les dimensions cumulées de ces étages dictent la longueur du compresseur.

Le document FR 2 404 102 A1 présente une couronne d'aubage fixe de turbomachine axiale. La couronne présente une virole externe présentant des ouvertures disposées en une rangée annulaire. Les aubes comprennent des plates-formes externes qui sont soudées au niveau des ouvertures de la virole externe. La virole externe comprend une cavité annulaire remplie de matériau abradable, ladite cavité étant située à proximité des ouvertures et des plateformes. La section transversale de la virole présente ainsi une portion à épaisseur variable à proximité de la zone de soude entre la virole et les plateformes. L'épaisseur de matière variable à proximité du cordon de soudure génère une inhomogénéité qui peut poser des problèmes au niveau de la réalisation de la soudure.

Le document FR 2 958 323 A divulgue un compresseur basse pression de turbomachine comprenant plusieurs étages de redresseur à aubes. Un étage de redresseur présente une virole externe dans laquelle sont ménagés des orifices alignés. Les aubes présentent des plates-formes dont les contours épousent les bords intérieurs des orifices de la virole externe. Une soudure réalisée à leur jonction permet de fixer les aubes via leurs plates-formes à la virole externe. L'étendue des plates-formes permet de ne pas exposer les corps des aubes pendant l'opération de soudage.

Or, pour réaliser une fixation par soudure optimale, il faut respecter des contraintes spatiales et géométriques. Entre autres, la soudure doit disposer d'un milieu homogène. Ceci peut se traduire par le fait que la soudure doit être réalisée à distance de coudes, et de préférence au travers de pièces présentant des épaisseurs constantes. Pour s'affranchir de ces contraintes, la zone coudée doit être éloignée des aubes, ce qui conduit à allonger les plates-formes des aubes, et donc le compresseur.

Dans le contexte d'une turbomachine, le compresseur basse pression occupe un espace important. L'allonger a un impact sur la taille et le dimensionnement du carter de la turbomachine. Le poids de cette dernière s'en retrouve accru. Lorsqu'une telle turbomachine est employée comme moyen de propulsion d'un avion, ce poids augmente la masse embarquée, ainsi que les ressources pour permettre sa sustentation. Les besoins en énergie primaire et la surface de portance doivent être adaptés.

Le document EP 2 202 388 A1 divulgue un assemblage de stator de turbomachine par chevauchement. Deux portions cylindriques formant des brides du stator se chevauchent au niveau des aubes de stator. Cet assemblage repose sur une fixation par boulons aveugles. Bien que réduisant l'encombrement axial, cette solution augmente l'encombrement radial. De plus cette solution n'est pas adaptée à une opération de soudage puisque l'inspection visuelle des deux côtés de la soudure n'est pas permis. Cette configuration ne se prête pas à une soudure par bombardement électronique en raison de la présence de l'aube sous la soudure.

### Résumé de l'invention

### Problème technique

L'invention a pour objectif de résoudre au moins un problème soulevé dans l'art antérieur. Plus particulièrement, l'invention a pour objectif d'alléger la turbomachine. Plus particulièrement encore, l'invention a pour objectif de rendre plus compact la turbomachine. L'invention a également pour objectif de pouvoir améliorer le rendement de la turbomachine et plus particulièrement de son compresseur.

### Solution technique

L'invention a pour objet un redresseur de turbomachine axiale comprenant une virole externe avec une rangée annulaire d'ouvertures et au moins une gorge annulaire interne destinée à recevoir une couche annulaire de matériau abradable, une rangée d'aubes statoriques avec des plates-formes disposées dans les ouvertures et fixées par un ou plusieurs cordons de soudure entre les plates-formes et les ouvertures, remarquable en ce que la rangée d'ouvertures et la gorge interne se chevauchent partiellement de manière à ce qu'une partie du ou des cordons de soudure soit positionnée axialement à hauteur de la gorge interne et les plates-formes s'étendent sur une portion du fond de la gorge interne.

Suivant un mode avantageux de l'invention, les plates-formes des aubes forment un ressaut délimitant la gorge interne.

Suivant un encore autre mode avantageux de l'invention, les ouvertures traversent la virole et la gorge.

Suivant un encore autre mode avantageux de l'invention, les plates-formes ont une forme générale de parallélogramme, préférentiellement rectangle, avec un côté amont et un côté aval, la partie du ou des cordons de soudure positionnée axialement à hauteur de la gorge interne s'étendant le long d'un des côtés amont et aval du parallélogramme.

Suivant un encore autre mode avantageux de l'invention, les ouvertures s'étendent suivant une direction principale majoritairement orientée suivant l'axe du redresseur, ladite direction principale formant préférentiellement un angle inférieur à 45°, plus préférentiellement inférieur à 30°, plus préférentiellement encore inférieur à 15° avec ledit axe.

Suivant un encore autre mode avantageux de l'invention, la virole externe comprend une paroi circulaire préférentiellement unitaire, avec un premier tronçon comprenant la gorge interne et un deuxième tronçon comprenant la rangée d'ouvertures et d'aubes, ladite paroi formant un épaulement entre lesdits tronçons.

Suivant un encore autre mode avantageux de l'invention, les plates-formes présentent des surfaces complémentaires aux ouvertures.

Suivant un encore autre mode avantageux de l'invention, la virole externe et/ou les plates-formes d'aubes statoriques sont généralement d'épaisseur constante.

Suivant un encore autre mode avantageux de l'invention, les plates-formes des aubes sont essentiellement noyées dans les ouvertures de la virole externe.

Suivant un encore autre mode avantageux de l'invention, la section de la gorge interne s'étend suivant une direction principale correspondant essentiellement à l'axe du redresseur, et présente une profondeur sensiblement constante, supérieure à 1,00 mm, préférentiellement supérieure à 2,00 mm ; encore plus préférentiellement supérieure à 3,00 mm.

Suivant un encore autre mode avantageux de l'invention, la gorge annulaire interne présente deux épaulements, au moins un des deux épaulements est incliné par rapport à la perpendiculaire au fond de la gorge annulaire interne.

Suivant un encore autre mode avantageux de l'invention, le redresseur présente des aubes fixées à la virole externe selon un moyen autre qu'une soudure.

Suivant un encore autre mode avantageux de l'invention, le redresseur est un redresseur de compresseur, préférentiellement un compresseur basse pression.

Par compresseur basse pression, on entend un compresseur disposé à la suite du turbofan. Sa pression d'entrée est similaire à la pression atmosphérique, rencontrée aux altitudes d'évolution d'un aéronef.

Suivant un encore autre mode avantageux de l'invention, la gorge annulaire interne a une longueur supérieure à 5,00 mm ; préférentiellement supérieure à 10,00 mm ; préférentiellement supérieure à 20,00 mm. La longueur est mesurée suivant l'axe du redresseur.

Suivant un encore autre mode avantageux de l'invention, les matériaux d'au moins une plate-forme et de la virole sont des nuances d'alliage sensiblement similaires ou compatibles pour être soudées.

Suivant un encore autre mode avantageux de l'invention, la virole comprend deux gorges annulaires internes, l'une étant disposée en amont et l'autre en aval des ouvertures, une première parties du ou des cordons de soudure étant située dans la gorge amont et une deuxième partie du ou des cordons de soudure étant située dans la gorge aval.

Suivant un encore autre mode avantageux de l'invention, les plates-formes présentent une épaisseur supérieure à la virole externe au niveau des ouvertures.

Suivant un encore autre mode avantageux de l'invention, la soudure présente une interruption de soudure sur les bords de la gorge annulaire de la virole externe.

Suivant un encore autre mode avantageux de l'invention, la plate-forme présente une portion s'étendant le long de la face extérieure de la virole externe et qui est soudée sur ladite face à hauteur axialement de la gorge interne.

L'invention a également pour objet une turbomachine comprenant au moins un compresseur avec au moins un redresseur, et au moins une turbine avec au moins un redresseur, caractérisée en ce que le ou au moins un des redresseurs du compresseur et/ou de la turbine est conforme à l'invention.

L'invention a également pour objet un procédé de fabrication d'un redresseur selon l'invention, comprenant les étapes suivantes : (a) mise à disposition de la virole externe et des aubes ; (b) mise en place et soudage des plates-formes dans les ouvertures de la virole externe; (c) mise en oeuvre de la couche de matériau abradable dans la gorge interne.

Suivant un mode avantageux de l'invention, le procédé comprend l'étape suivante entre les étapes (b) et (c) : usinage de la surface intérieure de la virole en vue de former la gorge interne.

### Avantages apportés

L'invention permet de raccourcir une turbomachine en agissant au niveau du compresseur. Chaque étage de redresseur combiné à une bande de matériau abradable permet de gagner quelques millimètres. Un centimètre peur être récupéré sur l'ensemble d'un compresseur basse pression.

L'invention offre également un gain aérodynamique puisque les soudures côté veine sont recouvertes par le matériau abradable. En effet, une partie des aspérités que présentent les soudures dans la veine sont à présent recouvertes par l'abradable. Ce résultat est atteint moyennant un allongement de la soudure, ainsi que la réalisation d'une plate-forme et d'une virole externe avec une marche.

L'invention facilite la conception d'une turbomachine et n'impose pas de ménager des espaces non exploités entre les rangées d'aubes fixes et mobiles. Si besoin, ces dernières peuvent être rapprochées dans un but de mieux gérer les écoulements, et donc d'optimiser le rendement de la turbomachine.

La fabrication d'un tel redresseur est facilitée. L'accessibilité des soudures est améliorée puisqu'elles sont localement éloignées des aubes, et disposées dans une gorge dégagée. Les dimensions de la gorge autorisent d'y effectuer des soudures provoquant certaines montées en température.

### Brève description des dessins

La figure 1 représente une coupe d'une turbomachine axiale selon l'invention.
La figure 2 illustre un compresseur de turbomachine axiale selon l'invention.
La figure 3 est une schématisation d'une section de redresseur de compresseur suivant l'invention.
La figure 4 représente une étape de fabrication du redresseur suivant un premier procédé de réalisation de l'invention.
La figure 5 représente une première étape de la fabrication du redresseur suivant un deuxième procédé de réalisation de l'invention.
La figure 6 représente une deuxième étape de la fabrication du redresseur suivant un deuxième procédé de réalisation de l'invention.

### Description des modes de réalisation

Dans la description qui va suivre, les termes intérieur et extérieur renvoient à un positionnement par rapport à l'axe de rotation d'une turbomachine axiale. Il en va de même pour les termes interne et externe. Les longueurs sont mesurées suivant l'axe de rotation de la turbomachine, les hauteurs radialement et les largeurs perpendiculairement aux hauteurs.

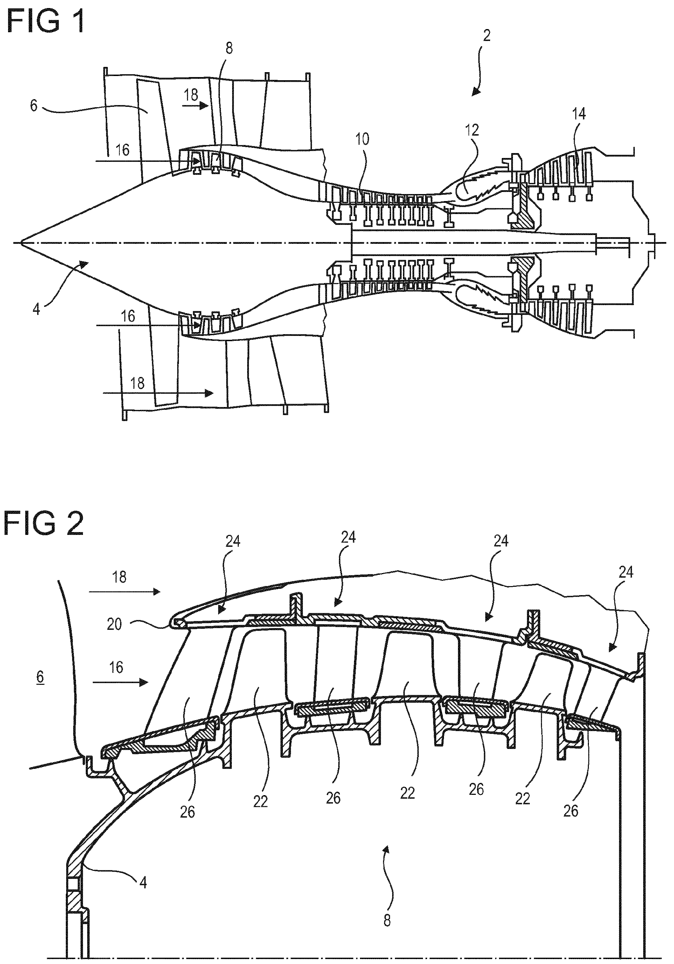

La figure 1 schématise une turbomachine axiale. Il s'agit dans ce cas précis d'un turboréacteur double-flux. Le turboréacteur 2 comprend un premier niveau de compression, dit compresseur basse-pression 8, un deuxième niveau de compression, dit compresseur haute-pression 10, une chambre de combustion 12 et un ou plusieurs niveaux de turbines 14. En fonctionnement, la puissance mécanique de la turbine 14 transmise via l'arbre central jusqu'au rotor 4 met en mouvement les deux compresseurs 8 et 10. Des moyens de démultiplication peuvent augmenter la vitesse de rotation transmise aux compresseurs. Ou encore, les différents étages de turbines peuvent être chacuns reliés aux étages de compresseur via des arbres concentriques. Ces derniers comportent plusieurs rangées d'aubes de rotor associées à des rangées d'aubes de stators. La rotation du rotor permet ainsi de générer un débit d'air et de comprimer progressivement ce dernier jusqu'à l'entrée de la chambre de combustion 12. Un ventilateur d'entrée communément désigné « turbofan » 6 est couplé au rotor 4 et génère un flux d'air qui se divise en un flux primaire 16 traversant les différents niveaux sus mentionnés de la turbomachine, et un flux secondaire 18 traversant un conduit annulaire (partiellement représenté) le long de la machine pour ensuite rejoindre le flux primaire en sortie de turbine.

La figure 2 est une vue en coupe d'un compresseur basse-pression d'une turbomachine axiale telle que celle de la figure 1. On peut y observer une partie du ventilateur d'entrée ou turbofan 6 et le bec de séparation 20 du flux primaire 16 et du flux secondaire 18. Le rotor 4 comprend plusieurs rangées d'aubes rotoriques 22. Le carter comprend plusieurs redresseurs 24 associés à des rangées d'aubes rotoriques 22. Chaque redresseur comprend une rangée d'aubes statoriques 26. Chaque paire de rangées d'aubes de rotor et de stator associées forme un étage de compression du compresseur 8.

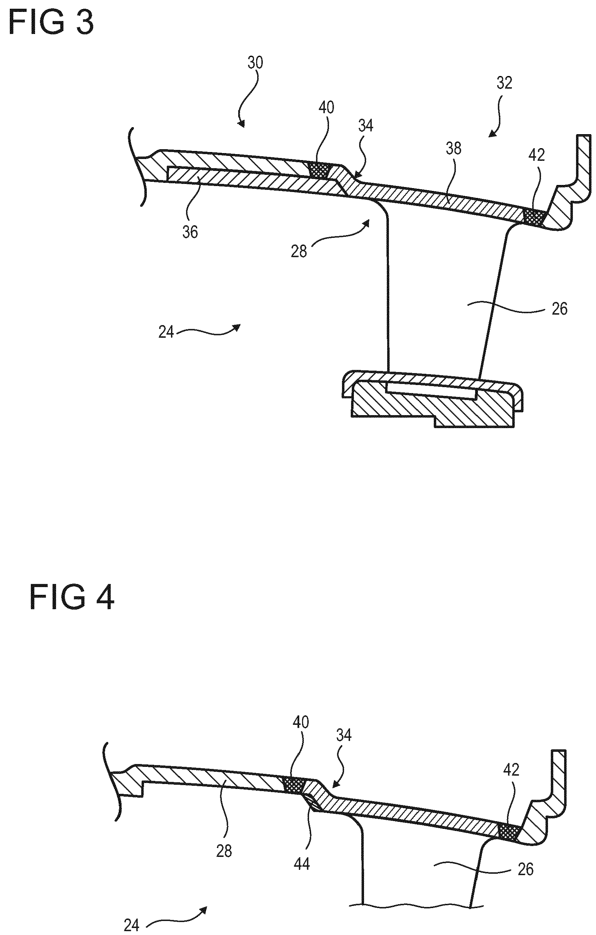

La figure 3 illustre une partie de redresseur 24 de turbomachine. Le redresseur 24 forme une couronne ayant pour axe de symétrie l'axe de rotation de la turbomachine. Il comprend une virole externe 28 sur laquelle est fixée une aube statorique 26. La virole externe 28 présente une surface intérieure permettant de canaliser le flux primaire. Sa surface intérieure est une surface de révolution. Elle est sensiblement cylindrique et montre une variation de diamètre, par exemple une diminution de diamètre dans le sens du flux. La virole présente un corps de révolution suivant un profil de révolution. Le profil de révolution présente un premier tronçon 30 et un deuxième tronçon 32 reliées par une zone coudée 34. Le premier tronçon 30 et le deuxième tronçon 32 peuvent être imbriqués au niveau de la zone coudée 34.

Le premier tronçon 30 peut être une partie amont. Il présente une gorge annulaire interne dans laquelle est présente une couche annulaire de matériau abradable 36. Ce matériau est apte à s'éroder par friction lorsqu'une extrémité d'aube rotorique 22 vient à son contact. La couche de matériau abradable 36 peut former une bande annulaire d'épaisseur sensiblement constante, afin de l'alléger et de simplifier sa mise en oeuvre. La surface intérieure de la couche de matériau abradable 36 affleure la surface intérieure de la plate-forme de l'aube statorique 26. Cette configuration permet d'optimiser l'écoulement en ne créant pas de discontinuité de surface pouvant perturber le flux.

La longueur de la couche de matériau abradable 36 est imposée par la longueur de l'extrémité de l'aube rotorique 22 disposée en regard. Des marges amont et aval peuvent être ajoutées pour prendre en compte les déformations de service de la turbomachine. Ces longueurs sont mesurées suivant l'axe de rotation de la turbomachine. La longueur de la couche de matériau abradable 36 peut être considérée comme une donnée fixe de la géométrie de la turbomachine.

Le deuxième tronçon 32 peut être une partie aval. Elle présente une gorge annulaire externe formant un évidement annulaire. Cet évidement permet d'alléger la virole externe.

Le premier tronçon 32 présente une ouverture traversant la virole externe 28. L'aube statorique présente une plate-forme 38 de surface complémentaire à l'ouverture de sorte à pouvoir occulter cette dernière. La plate-forme 38 est fixée à sa jonction avec l'ouverture, préférentiellement au niveau de ses bords, préférentiellement sur tout son contour.

La fixation s'effectue par soudage, préférentiellement à l'aide d'un cordon de soudure, préférentiellement continu. Le cordon de soudure est réalisé sur tout le pourtour de l'ouverture de sorte à créer une étanchéité. La soudure forme un cordon de soudure avec une partie amont 40 et une partie aval 42, ainsi que des parties latérales (non représentées). Cette soudure peut être réalisée par bombardement électronique.

Avantageusement, le deuxième tronçon 32 comprend une rangée d'ouvertures recevant une rangée d'aubes statoriques au niveau de leurs plates-formes. Préférentiellement, les contours extérieurs des plates-formes 38 longent les bords intérieurs des ouvertures. Préférentiellement, les ouvertures présentent des formes similaires, tout comme les plates-formes 38

La partie amont 40 de la soudure est disposée sous la couche de matériau abradable 36. A cet emplacement, le profil du corps de la virole externe 28 est sensiblement droit. La partie amont de la soudure 40 y est implantée de sorte à s'affranchir des contraintes géométriques. Cet emplacement de soudure permet de ne plus la disposer entre la zone coudée 34 et le corps de l'aube statorique. Ainsi, les contraintes qui imposent de rallonger la plate-forme entre la zone coudée 34 et le corps de l'aube n'existent plus. De plus, la longueur de la partie amont de la soudure 40 est inférieure à la longueur de la couche de matériau abradable 36, la présence de la partie amont de la soudure 40 n'affecte plus la longueur de la virole externe 28.

De ce fait, par rapport à un redresseur connu de l'art antérieur, la partie de la plate-forme située entre le corps de l'aube statorique et la zone coudée 34 peut être raccourcie. Cette économie de longueur axiale se répercute sur la virole externe 28. Pour cela, toutes les aubes statoriques soudées d'un même étage doivent avoir leur partie amont 40 de soudure disposées dans une même gorge. A chaque même soudure amont ou aval disposée sous une couche de matériau abradable 28, un gain substantiel peut être réalisé. Ce gain peut être supérieur à 2,00 mm, préférentiellement supérieur à 3,00 mm. L'invention, à l'échelle d'un compresseur comprenant plusieurs étages de compression, par exemple trois étages de compression, peut permettre de gagner plus de 10,00 mm. Le carter de la turbomachine peut également être raccourci. Ces réductions de taille permettent d'alléger la turbomachine, et de la rendre plus robuste.

L'enseignement de l'invention peut également être appliqué à un redresseur de turbine de turbomachine. Une soudure d'une plate-forme d'aube de redresseur peut être déplacée axialement afin de la sortir d'une zone présentant des contraintes. Ainsi, une réduction de la longueur importante peut être atteinte sur une turbomachine en appliquant l'enseignement de l'invention à la fois au(x) compresseur(s) et au(x) turbine(s) de la turbomachine. Dans ce cas, le matériau abradable peut être un matériau avec une structure en nid d'abeille.

Plusieurs procédés de fabrication permettent de réaliser le redresseur 24.

La figure 4 présente une étape intermédiaire de réalisation du redresseur 24 suivant un premier procédé de fabrication. Le redresseur 24 est réalisé à partir d'une virole externe avec des ouvertures dans lesquelles se logent les plates-formes. La virole 28 et les plates-formes 38 présentent généralement leurs côtes finies.

Un cordon de soudure est effectué à la jonction entre les plates-formes et les ouvertures de la virole externe. Le cordon de soudure est essentiellement fin, son épaisseur est proche de celle de la virole externe 28. Il est économique à réaliser en raison de sa faible section. Une surépaisseur 44 peut être ajoutée au niveau de la plate-forme, dans la zone coudée 34. Après soudage, la surépaisseur 44 est usinée, par exemple par tournage.

Le premier procédé de fabrication du redresseur comprend les étapes de :
a. mise à disposition de la virole externe 28 et des aubes 26 à leurs côtes finies,
b. mise en place et soudage des plates-formes 38 dans les ouvertures de la virole externe 28 de sorte à affleurer leurs surfaces intérieures ;
c. soudage des plates-formes 38 aux ouvertures de la virole externe.

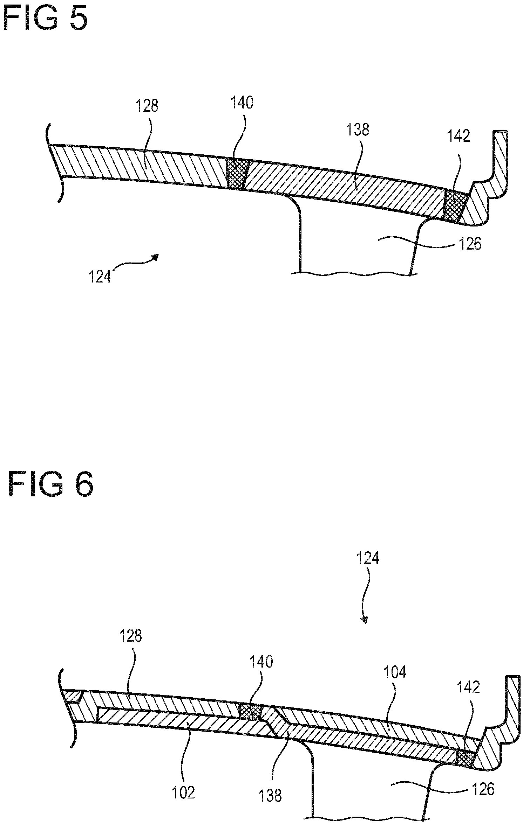

La figure 5 représente une première étape intermédiare d'un deuxième procédé de fabrication du redresseur 24 qui est représenté en figure 3. Cette figure 5 reprend la numérotation des figures précédentes pour les éléments correspondants, la numération étant toutefois incrémentée de 100. Des numéros spécifiques sont utilisés pour les éléments spécifiques à ce mode de réalisation.

Dans ce procédé de fabrication, le redresseur est réalisé à partir de plates-formes brutes 138 et d'une aube brute 126 avec virole externe brute 128 présentant des surépaisseurs radiales. Elles peuvent présenter des épaisseurs égales au niveau de leur jonction. Les plates-formes brutes 138 des aubes statoriques brutes 126 sont placées dans les ouvertures de la virole externe brute 128, puis y sont soudées à leurs jonctions. La figure 5 illustre une partie amont brute 140 et une partie aval brute 142 du cordon de soudure. L'ensemble ainsi obtenu forme un redresseur brut 124.

La figure 6 représente une deuxième étape intermédiare du deuxième procédé de fabrication du redresseur. La deuxième étape intermédiaire comprend des opérations d'usinage du redresseur brut 124 représenté en figure 5. Les opérations d'usinage peuvent comprendre des usinages d'ébauche et/ou des usinages de finition.

Un usinage intérieur 102 est effectué sur la surface intérieure du redresseur brut 124. Il permet de créer une gorge annulaire dans laquelle peut être déposée la couche de matériau abradable. Plusieurs gorges annulaires peuvent être réalisées pour accueillir plusieurs couches annulaires de matériau abradable disposées axialement. L'usinage intérieur 102 s'étend axialement sur la virole externe brute 128 et sur une partie des plates-formes brutes 138. Il réalise également un enlèvement de matière dans la partie amont 102 du cordon de soudure.

Un ou plusieurs usinages extérieurs 104 peuvent être effectués sur la surface extérieure du redresseur brut 124. Ces usinages permettent d'alléger le redresseur en supprimant de la matière. De tels usinages peuvent être réalisés au niveau des plates-formes brutes 138 des aubes de stator, ainsi que dans la partie aval 142 du cordon de soudure.

Les usinages intérieur et/ou extérieur sont avantageusement réalisés par tournage pour améliorer leur circularité et leur cylindricité.

Le deuxième procédé de fabrication du redresseur comprend les étapes de :
a. mise à disposition de la virole externe brute 128 et des aubes brutes 126 avec des plates-formes brutes 138 ;
b. mise en place et soudage des plates-formes brutes 138 dans les ouvertures de la virole externe brute 128 ;
c. réalisation d'un usinage intérieur 102 de la face intérieure de la virole externe brute 128, réalisation d'un usinage extérieur 104 de la face extérieur de la virole externe brute 128;
d. mise en oeuvre de la couche de matériau abradable dans la gorge interne.

Le deuxième procédé de fabrication offre l'avantage de réaliser une soudure sur une surface plane. Cette soudure sera plus homogène et donc plus résistante. Par ailleurs, une soudure peut modifier la structure cristalline des matériaux et la rendre plus fragile. Cette fragilisation combinée à une forme coudée peut réduire la durée de vie d'une pièce ainsi réalisée. Les contraintes thermiques et vibratoires peuvent précipiter la rupture mécanique. En disposant une soudure sous la bande de matériau abradable ; à distance de la partie coudée, la virole conserve une meilleure durée de vie.

## Revendications

1. Redresseur (24) de turbomachine axiale comprenant :
- une virole externe (28) avec une rangée annulaire d'ouvertures et au moins une gorge annulaire interne destinée à recevoir une couche annulaire de matériau abradable (36),
- une rangée d'aubes statoriques (26) avec des plates-formes (38) disposées dans les ouvertures et fixées par un ou plusieurs cordons de soudure entre les plates-formes (38) et les ouvertures,
**caractérisé en ce que** la rangée d'ouvertures et la gorge interne se chevauchent partiellement de manière à ce qu'une partie (40, 42) du ou des cordons de soudure soit positionnée axialement à hauteur de la gorge interne et que les plates-formes (38) s'étendent sur une portion du fond de la gorge interne.

2. Redresseur (24) selon la revendication 1, **caractérisé en ce que** les plates-formes (38) des aubes (26) forment un ressaut délimitant la gorge interne.

3. Redresseur (24) selon l'une des revendications 1 à 2, **caractérisé en ce que**
les ouvertures traversent la virole (28) et la gorge interne.

4. Redresseur (24) selon l'une des revendications 1 à 3, **caractérisé en ce que**
les plates-formes (38) ont une forme générale de parallélogramme, préférentiellement rectangle, avec un côté amont et un côté aval, la partie (40, 42) du ou des cordons de soudure positionnée axialement à hauteur de la gorge interne s'étendant le long d'un des côtés amont et aval du parallélogramme.

5. Redresseur (24) selon l'une des revendications 1 à 4, **caractérisé en ce que**
les ouvertures s'étendent suivant une direction principale majoritairement orientée suivant l'axe du redresseur (24), ladite direction principale formant préférentiellement un angle inférieur à 45°, plus préférentiellement inférieur à 30°, plus préférentiellement encore inférieur à 15°, avec ledit axe.

6. Redresseur (24) selon l'une des revendications 1 à 5, **caractérisé en ce que** la
virole externe (28) comprend une paroi circulaire préférentiellement unitaire, avec un premier tronçon (30) comprenant la gorge interne et un deuxième tronçon (32) comprenant la rangée d'ouvertures et d'aubes (26), ladite paroi formant un épaulement entre lesdits tronçons.

7. Redresseur (24) selon l'une des revendications 1 à 6, **caractérisé en ce que**
les plates-formes (38) présentent des surfaces complémentaires aux ouvertures.

8. Redresseur (24) selon l'une des revendications 1 à 7, **caractérisé en ce que** la
virole externe (28) et/ou les plates-formes (38) d'aubes statoriques (26) sont généralement d'épaisseur constante.

9. Redresseur (24) selon l'une des revendications 1 à 8, **caractérisé en ce que**
les plates-formes (38) des aubes (26) sont essentiellement noyées dans les ouvertures de la virole externe (28).

10. Redresseur (24) selon l'une des revendications 1 à 9, **caractérisé en ce que**
la section de la gorge interne s'étend suivant une direction principale correspondant essentiellement à l'axe du redresseur (24), et présente une profondeur sensiblement constante, supérieure à 1,00 mm, préférentiellement supérieure à 2,00 mm ; encore plus préférentiellement supérieure à 3,00 mm.

11. Redresseur (24) selon l'une des revendications 1 à 10, **caractérisé en ce que**
la gorge annulaire interne présente deux épaulements, au moins un des deux épaulements est incliné par rapport à la perpendiculaire au fond de la gorge annulaire interne.

12. Turbomachine comprenant au moins un compresseur (8, 10) avec au moins un redresseur, et au moins une turbine (14) avec au moins un redresseur, **caractérisée en ce que** le ou au moins un des redresseurs (24) du compresseur (8, 10) et/ou de la turbine (14) est conforme à l'une des revendications 1 à 11.

13. Procédé de fabrication d'un redresseur (24) selon l'une des revendications 1 à 11, comprenant les étapes suivantes :
(a) mise à disposition de la virole externe (28) et des aubes (26) ;
(b) mise en place et soudage des plates-formes (38) dans les ouvertures de la virole externe (28) ;
(c) mise en oeuvre de la couche de matériau abradable (36) dans la gorge interne.

14. Procédé de fabrication d'un redresseur (24) selon la revendication 13,
**caractérisé en ce qu'**il comprend l'étape suivante entre les étapes (b) et (c) :
usinage de la surface intérieure de la virole (28) en vue de former la gorge interne.

## Patentansprüche

1. Gleichrichter (24) einer axialen Turbomaschine, bestehend aus:
- einem äußeren Ring (28) mit einer ringförmigen Reihe von Öffnungen und mindestens einer ringförmigen inneren Auskehlung, die für die Aufnahme einer ringförmigen Schicht eines verschleißbaren Materials (36) bestimmt ist,
- einer Reihe von Leitschaufeln (26) mit Plattformen (38), die in den Öffnungen angeordnet sind und anhand einer Schweißnaht oder mehrerer Schweißnähte zwischen den Plattformen (38) und den Öffnungen befestigt sind,
**dadurch gekennzeichnet, dass** sich die Reihe von Öffnungen und die innere Auskehlung teilweise in der Weise überlagern, dass ein Teil (40, 42) der Schweißnaht oder der Schweißnähte axial in Höhe der inneren Auskehlung positioniert ist und sich die Plattformen (38) über einen Teil des Bodens der inneren Auskehlung erstrecken.

2. Gleichrichter (24) nach Anspruch 1, **dadurch gekennzeichnet, dass** die Plattformen (38) und die Leitschaufeln (26) einen Vorsprung bilden, der die innere Auskehlung begrenzt.

3. Gleichrichter (24) nach einem der Ansprüche 1 bis 2, **dadurch gekennzeichnet, dass** die Öffnungen den Ring (28) und die innere Auskehlung durchqueren.

4. Gleichrichter (24) nach einem der Ansprüche 1 bis 3, **dadurch gekennzeichnet, dass** die Plattformen (38) die allgemeine Form eines Parallelogramms, vorzugsweise eines Rechtecks haben, mit einer Oberseite und einer Unterseite, wobei sich der Teil (40, 42) der Schweißnaht oder der Schweißnähte, der axial in Höhe des inneren Auskehlung positioniert ist, entlang einer der Ober- und Unterseiten des Parallelogramms erstreckt.

5. Gleichrichter (24) nach einem der Ansprüche 1 bis 4, **dadurch gekennzeichnet, dass** sich die Öffnungen in einer Hauptrichtung erstrecken, die mehrheitlich entlang der Achse des Gleichrichters (24) ausgerichtet ist, wobei die genannte Hauptrichtung vorzugsweise einen Winkel von unter 45°, bevorzugter unter 30° und noch bevorzugter unter 15° mit der genannten Achse bildet.

6. Gleichrichter (24) nach einem der Ansprüche 1 bis 5, **dadurch gekennzeichnet, dass** der äußere Ring (28) eine ringförmige, vorzugsweise aus einem Stück bestehende Wandung beinhaltet, mit einem ersten Abschnitt (30), der die interne Auskehlung beinhaltet und einem zweiten Abschnitt (32), der die Reihe von Öffnungen und Leitschaufeln (26) beinhaltet, wobei die genannte Wandung eine Schulter zwischen den genannten Abschnitten bildet.

7. Gleichrichter (24) nach einem der Ansprüche 1 bis 6, **dadurch gekennzeichnet, dass** die Plattformen (38) Oberflächen aufweisen, die sich komplementär zu den Öffnungen verhalten.

8. Gleichrichter (24) nach einem der Ansprüche 1 bis 7, **dadurch gekennzeichnet, dass** der äußere Ring (28) und/oder die Plattformen (38) der Leitschaufeln (26) im Allgemeinen eine konstante Dicke aufweisen.

9. Gleichrichter (24) nach einem der Ansprüche 1 bis 8, **dadurch gekennzeichnet, dass** die Plattformen (38) der Leitschaufeln (26) im Wesentlichen in die Öffnungen des äußeren Rings (28) eingelassen sind.

10. Gleichrichter (24) nach einem der Ansprüche 1 bis 9, **dadurch gekennzeichnet, dass** sich der Querschnitt der internen Auskehlung in einer Hauptrichtung erstreckt, die im Wesentlichen der Achse des Gleichrichters (24) entspricht und eine annähernd konstante Tiefe von mehr als 1,00 mm, vorzugsweise mehr als 2,00 und noch bevorzugter von mehr als 3,00 mm aufweist.

11. Gleichrichter (24) nach einem der Ansprüche 1 bis 10, **dadurch gekennzeichnet, dass** die ringförmige innere Auskehlung zwei Schultern aufweist, wobei mindestens eine der beiden Schultern im Verhältnis zur Lotrechten am Boden der inneren ringförmigen Auskehlung geneigt ist.

12. Turbomaschine mit mindestens einem Kompressor (8, 10) mit mindestens einem Gleichrichter und mindestens einer Turbine (14) mit mindestens einem Gleichrichter, **dadurch gekennzeichnet, dass** der oder mindestens einer der Gleichrichter (24) des Kompressors (8, 10) und/oder der Turbine einem der Ansprüche 1 bis 11 entspricht.

13. Verfahren für die Herstellung eines Gleichrichters nach einem der Ansprüche 1 bis 11, das die folgenden Phasen einschließt:
(a) Bereitstellung des äußeren Rings (28) und der Leitschaufeln (26);
(b) Einsetzen und Schweißen der Plattformen (38) in die Öffnungen des äußeren Rings (28);
(c) Aufbringen der Schicht aus einem verschleißbaren Material (36) in der inneren Auskehlung.

14. Verfahren für die Herstellung eines Gleichrichters (24) nach Anspruch 13, **dadurch gekennzeichnet, dass** es die folgende Phase zwischen den Phasen (b) und (c) einschließt: Bearbeitung der inneren Oberfläche des Rings (28), um die innere Auskehlung zu bilden.

## Claims

1. Axial turbomachine stator (24), comprising:
- an external shell (28) with an annular array of openings and at least one internal annular groove designed to hold an annular layer of abradable material (36),
- a row of stator blades (26) with platforms (38) located in the openings and secured by one or more weld beads between the platforms (38) and the openings,
wherein the row of openings and the internal groove partially overlap so that a part (40, 42) of the weld bead(s) is/are positioned axially in the internal groove and the platforms (38) extend over a portion of the bottom of the internal groove.

2. Stator (24) according to Claim 1, wherein the platforms (38) of the blades (26) form a lip defining the internal groove.

3. Stator (24) according to one of Claims 1 and 2, wherein the openings pass through the shell (28) and the internal groove.

4. Stator (24) according to one of Claims 1 to 3, wherein the platforms (38) have the general shape of a parallelogram, preferably rectangular, with an upstream side and a downstream side, the part (40,42) of the weld bead(s) positioned axially in the internal groove extend along one of the upstream and downstream sides of the parallelogram.

5. Stator (24) according to one of Claims 1 to 4, wherein the openings extend along a main direction predominantly oriented along the axis of the stator (24), the said main direction preferentially forming an angle less than 45°, more preferably less than 30°, even more preferably less than 15° with the said axis.

6. Stator (24) according to one of Claims 1 to 5, wherein the external shell (28) preferably comprises a single-piece circular wall with a first section (30) comprising the internal groove and a second section (32) comprising the row of openings and blades (26), the said wall forming a shoulder between the said sections.

7. Stator (24) according to one of Claims 1 to 6, wherein the platforms (38) the have surfaces additional to the openings.

8. Stator (24) according to one of Claims 1 to 7, wherein the external shell (28) and/or the platforms (38) of the stator blades (26) are generally of constant thickness.

9. Stator (24) according to one of Claims 1 to 8, wherein the platforms (38) of the blades (26) are substantially embedded in the openings of the external shell (28).

10. Stator (24) according to one of Claims 1 to 10, wherein the internal section of the groove extends in a main direction corresponding substantially to the axis of the stator (24), and has a substantially constant depth greater than 1.00 mm, preferably greater than 2.00 mm, even more preferably greater than 3.00 mm.

11. Stator (24) according to one of Claims 1 to 10, wherein the internal annular groove comprises two shoulders, at least one of the two shoulders is inclined relative to the perpendicular to the bottom of the internal annular groove.

12. Turbomachine comprising at least a compressor (8, 10) with at least one stator and at least one turbine (14) with at least one stator, wherein the or at least one of the compressor (8, 10) and/or turbine (14) stators (24) is in accordance with one of Claims 1 to 11.

13. A method of manufacturing a stator (24) according to one of Claims 1 to 11, comprising the following steps:
(a) make the external shell (28) and the blades (26);
(b) locate and weld the platforms (38) in the openings of the external shell (28);
(c) fit the layer of abradable material (36) in the internal groove.

14. A method of manufacturing a stator (24) according to Claim 13, wherein it comprises the following step between steps (b) and (c):
machine the inner surface of the shell (28) to form the inner groove.
